# EUROPEAN PATENT SPECIFICATION

(11) **EP 3 139 707 B1**
(45) Date of publication and mention of the grant of the patent: **02.12.2020**
(21) Application number: 15183593.1
(22) Date of filing: 02.09.2015
(51) Int. Cl.: H05B 47/155, H04N 5/64

(54) **ELECTRONIC DEVICE AND METHOD FOR DEMONSTRATING AMBIENT LIGHTING SURROUNDING A DISPLAY**
ELEKTRONISCHE VORRICHTUNG UND VERFAHREN ZUR PRÄSENTATION VON UMGEBUNGSBELEUCHTUNG UM EINE ANZEIGE
DISPOSITIF ÉLECTRONIQUE ET PROCÉDÉ DE MISE EN ÉVIDENCE D'UN ÉCLAIRAGE AMBIANT ENTOURANT UN DISPOSITIF D'AFFICHAGE

(43) Date of publication of application: 08.03.2017
(73) Proprietor: TOP Victory Investments Limited, Kowloon, Hong Kong 999077 (CN)
(72) Inventor: Kwisthout, Cornelis Wilhelmus, B-9052 Ghent (BE)
(74) Representative: DREISS Patentanwälte PartG mbB

(56) References cited:
- EP-A1- 2 779 651
- US-A1- 2008 297 591
- "Ambilight Player 2", , 21 August 2015 (2015-08-21), XP054976297, Retrieved from the Internet: URL:https://web.archive.org/web/2015082104 5042/https://secure.philips.com/campaign/a mbilightplayer/player?api= [retrieved on 2016-01-12]
- AKIRAK41: "Philips ambilight", YOUTUBE, [Online] 21 April 2011 (2011-04-21), XP054976285, Retrieved from the Internet: URL:https://www.youtube.com/watch?v=za1Tup QMr30> [retrieved on 2016-01-04]

## Description

### Field of the invention

The invention relates to an electronic device for demonstrating ambient lighting surrounding a display.

The invention further relates to a method of demonstrating ambient lighting surrounding a display.

The invention also relates to a computer program product enabling a programmable device to perform a method of demonstrating ambient lighting surrounding a display.

### Background of the invention

Examples of electronic devices that produce ambient lighting surrounding a display are Philips™ Ambilight™ TVs. As the lighting in shops is often not such that the effect of the ambient lighting of the Ambilight TVs is sufficiently noticeable, content has been created that shows an Ambilight TV in action. This content is intended for display on Ambilight TVs in shops. A drawback of using this content is that the relation between the Ambilight TVs in the shops and the content of the Ambilight TV in action displayed on these TVs is not always clear to shoppers and does not increase the noticeability of the ambient lighting as much as desired.

EP2779651 discloses a method of configuring a system comprising a primary display device and one or more remotely controllable lamps, comprising the steps of: presenting in a user interface the one or more remotely controllable lamps and information about a geometry related to the primary display device; and using the user interface to enable a user to link selected ones of said lamps with parts of said geometry in order to establish a control of the selected lamp dependent on light control signals associated with the linked part of the geometry.

US2008297591 discloses a supplementary visual display system for use in conjunction with a display device including an image display region for presenting images to a viewer.

"Ambilight Player 2", (20150821), URL: https://web.archive.org/web/20150821045042/https://secure.philips.com/c ampaign/ambilightplayer/player?api=, (20160112), XP054976297 discloses a video sequence with an Ambilight™ feature of a TV.

AKIRAK41, "Philips ambilight", YOUTUBE, (20110421), URL: https://www.youtube.com/watch?v=za1TupQMr30, (20160104), XP054976285 [X] 1,7-9 * timecode 0:16 - 0:24 discloses a video sequence with an Ambilight™ feature of a TV.

### Summary of the invention

It is a first object of the invention to provide an electronic device, which provides an improved demonstration of ambient lighting surround a display, as defined in the appended independent claim 1.

It is a second object of the invention to provide a method, which provides an improved demonstration of ambient lighting surround a display, as defined in the appended independent claim 9.

It is a third object of the invention to provide a computer program as defined in the appended independent claim 15.

By using similar or identical parameters for both the real ambient lighting surrounding the display and the virtual ambient lighting surrounding the virtual display device, the noticeability of the ambient lighting feature of the electronic device increases. By determining these parameters based on a content item displayed by the virtual display device and not based on the virtual ambient lighting, it is prevented that the display of the virtual display device, and the virtual ambient lighting in particular, results in different ambient lighting effects than those that would be generated in a regular viewing mode and have a less clear relation to the content item being displayed. As an additional advantage, the virtual display device can display any type of content that is desired, including broadcast content, as special content for demonstrating ambient lighting is no longer needed.

Said parameters may be determined by analyzing a plurality of measurement zones in said image. This allows a measurement zone close to the source of the ambient lighting to be used for each of the (ambient) light sources and therefore the sources of ambient lighting can be controlled to have a color and/or intensity that are similar to that of the content close to that light source.

The same amount of said measurement zones may be analyzed when said virtual display device is displayed as when regular content is displayed, i.e. as when said virtual display device is not displayed. The amount of measurement zones preferably depends on the amount of ambient light sources or the amount of ambient light segments. To keep the same amount of said measurement zones in both modes, they will often need to be scaled.

Said measurement zones may be positioned near at least two sides of said image when regular content is displayed. In this way, the sources of ambient lighting can be controlled to have a color and/or intensity that are similar to those of the content close to that light source, which results in better ambient light effects.

Said measurement zones may have a certain relation to dimensions of said content item (displayed by said virtual display device) when said virtual display device is displayed and dimensions of said measurement zones may have said certain relation to dimensions of said image (i.e. full screen) when regular content is displayed. By scaling the measurement zones, it is possible to keep the same amount of said measurement zones in both modes.

In an embodiment, said measurement zones have a similar or identical overlap when said virtual display device is displayed as when regular content is displayed. This helps ensure that the ambient lighting effects are similar or identical in both modes and the mode in which the virtual display device is displayed provides a good representation of the mode in which regular content is displayed.

Said virtual display device may have the same appearance as a device comprising said display. This helps strengthen a viewer-perceptual relation between the real ambient lighting and the virtual ambient lighting and thus further increases the noticeability of the ambient lighting feature.

Said processor may be further operative to use said display interface to cause a background to be displayed around said virtual display device on said display. This helps shoppers understand what the ambient lighting would look like in their homes and therefore improves the effectiveness of the demonstration of the ambient lighting feature.

### Brief description of the Drawings

These and other aspects of the invention are apparent from and will be further elucidated, by way of example, with reference to the drawings, in which:
Fig.1 is a block diagram of the electronic device of the invention;
Fig.2 depicts a first embodiment of the electronic device in a regular viewing mode;
Fig.3 depicts the first embodiment of the electronic device when displaying the virtual display device;
Fig.4 depicts a second embodiment of the electronic device in a regular viewing mode;
Fig.5 depicts the second embodiment of the electronic device when displaying the virtual display device; and
Fig.6 is a flow diagram of the method of the invention.

Corresponding elements in the drawings are denoted by the same reference numeral.

### Detailed description of the Drawings

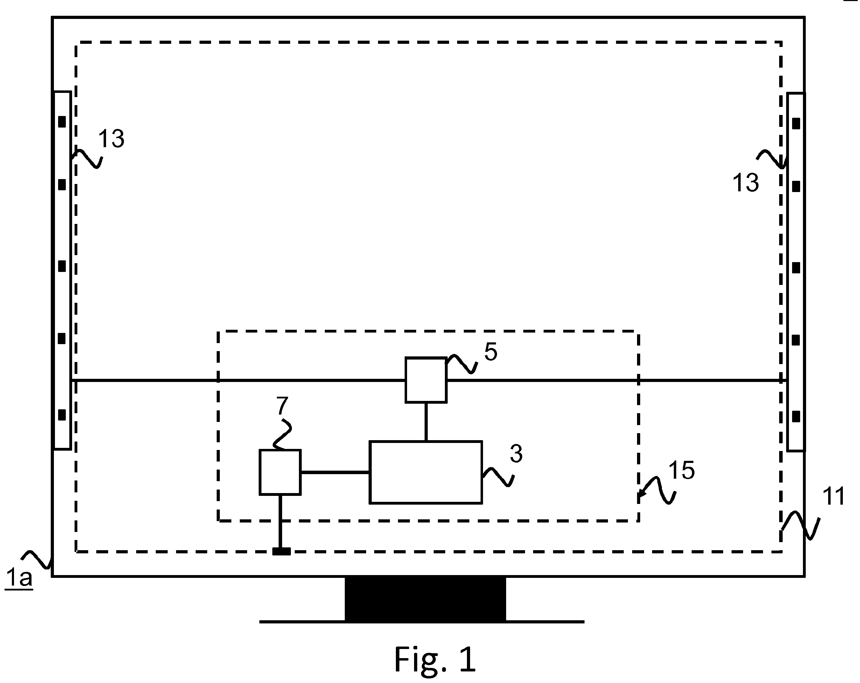

The electronic device 1 a of the invention comprises a display interface 7 for sending an image to a display 11, an ambient lighting controller 5 and a processor 3, see Fig.1 . The ambient lighting controller 5 is operative to control ambient lighting surrounding the display 11 using parameters determined based on contents of the image. The processor 3 is operative to use the display interface 7 to cause a virtual display device and virtual ambient lighting surrounding the virtual display device to be displayed on the display 11, the virtual ambient lighting being generated using further parameters similar or identical to the parameters. The parameters are determined based on a content item displayed by the virtual display device and not based on the virtual ambient lighting.

The electronic device 1 a may be a television or a monitor or a device for use with a television or monitor, for example. The processor 3 may be a general purpose processor, such as a TV SoC (e.g. manufactured by MediaTek or NovaTek), for example. The ambient lighting controller 5 may be a suitably programmed FPGA, for example. The ambient light controller 5 may be coupled to and control two light strips 13, for example. Alternatively, the ambient light controller 5 may be coupled to and control more or less than two light strips or light emitting components other than light strips. The light strips 13 may comprise one or more light emitting (e.g. LED) elements. The display 11 may be an LCD or OLED display panel, for example. The electronic device 1 a may comprise the display 11, but this is not required. The display interface 7 may comprise an eDP and/or LVDS connector, for example. The electronic device 1 may be installed on a display device stand (e.g. for a monitor or a TV), for example. Alternatively, the electronic device 1a may be installed on a wall mount, for example. The electronic device 1a may further comprise components typical for a display device such as a television or a monitor, e.g. a power supply, an IR/RF receiver for receiving signals from a remote control, speakers, broadcast and connectivity connectors, e.g. HDMI, USB, coaxial in (for TV signal), coaxial and/or optical out (for audio), one or more wireless transceivers, e.g. WiFi or BlueTooth, one or more slots for a conditional access module, and/or one or more dedicated processors, e.g. for audio and/or video processing. The processor 3, the ambient lighting controller 5 and the display interface 7 may be mounted on a printed circuit board 15.

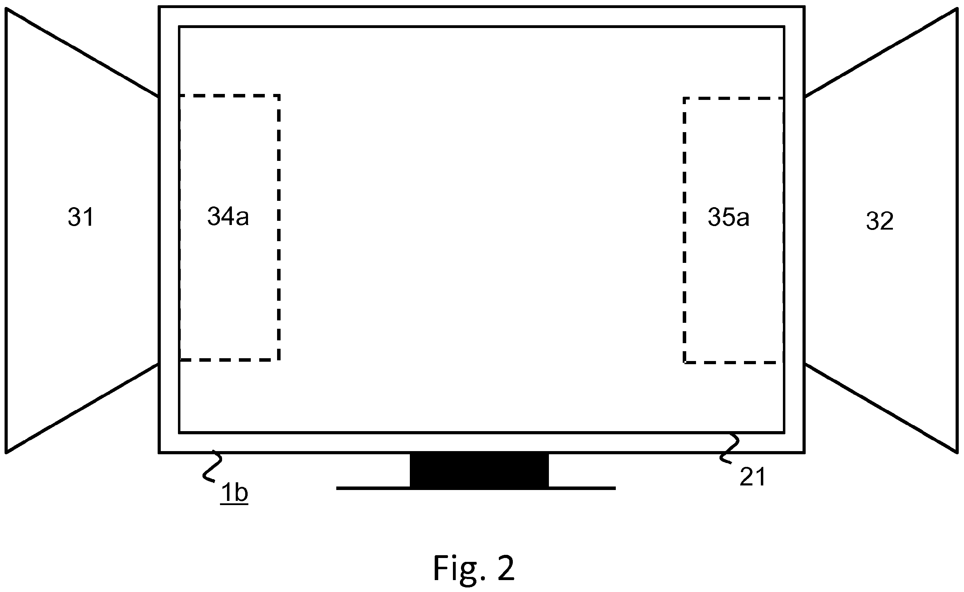

Fig.2 shows an electronic device 1 b which comprises the display 11 of Fig.1 . Light strips 13 are placed at the left and right side of the electronic device 1b as shown in Fig.1 . These lights strips 13 generate light beams 31 and 32. Light strips 13 are controlled by the ambient lighting controller 5. Ambient light controller 5 determines the parameters (e.g. color and intensity) with which to control the light strips 13. These parameters are determined by analyzing a plurality of measurement zones in the image. This analysis may be performed by the ambient light controller 5 or the processor 3, for example. The analysis may comprise determining an average or median color and intensity of each measurement zone, for example. The further parameters may be copied or derived from the parameters or the same algorithm may be performed twice, resulting in similar or identical results.

In this embodiment, each side of the electronic device is associated with a single measurement zone. Measurement zones 34a and 35a are used in a regular viewing mode, i.e. when the virtual display device is not displayed. Measurement zone 34a is analyzed in order to determine the parameters for generating light beam 31. Measurement zone 35a is analyzed in order to determine the parameters for generating light beam 32. All light emitting elements (e.g. LEDs) on a light strip may receive the same parameters or some or all of the light emitting elements may cooperate to generate a light beam with the desired parameters. Instead of light strips, single light emitting elements may be used, e.g. projectors. Measurement zones 34a and 35a are positioned near the left and right sides of image 21

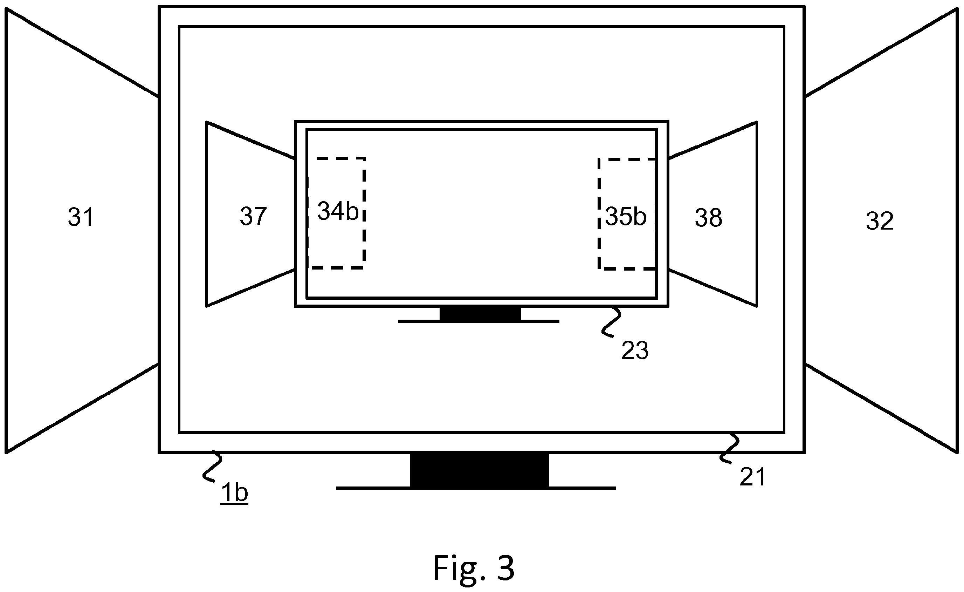

Fig.3 shows the virtual display device 23 and virtual ambient light beams 37 and 38 surrounding the virtual display device 23 displayed on the display. The virtual display device 23 may show live content, e.g. from a tuner or the Internet, or stored content, e.g. stored locally or on the Internet. It may be possible to re-use existing Picture-in-Picture functionality of a TV for this purpose. The virtual display device 23 may display content chosen by an employee of the shop, for example. The same amount of measurement zones (i.e. two) is analyzed when displaying the virtual display device 23 as when displaying regular content. When the virtual display device 23 is displayed, the measurement zones 34b and 35b are analyzed. These measurement zones 34b and 35b are regions of the content item displayed by the virtual display device 23. The parameters determined by analyzing measurement zones 34b and 35b are used to generate both the real (ambient) light beams 31 and 32 and the virtual (ambient) light beams 37 and 38.

In Fig. 3 , the virtual display device 23 has the same appearance as the electronic device 1b. In the same or in a different embodiment, the processor 3 is further operative to use the display interface 7 to cause a background to be displayed around the virtual display device 23 on the display 11. This background may be a lifestyle image depicting a living room, for example.

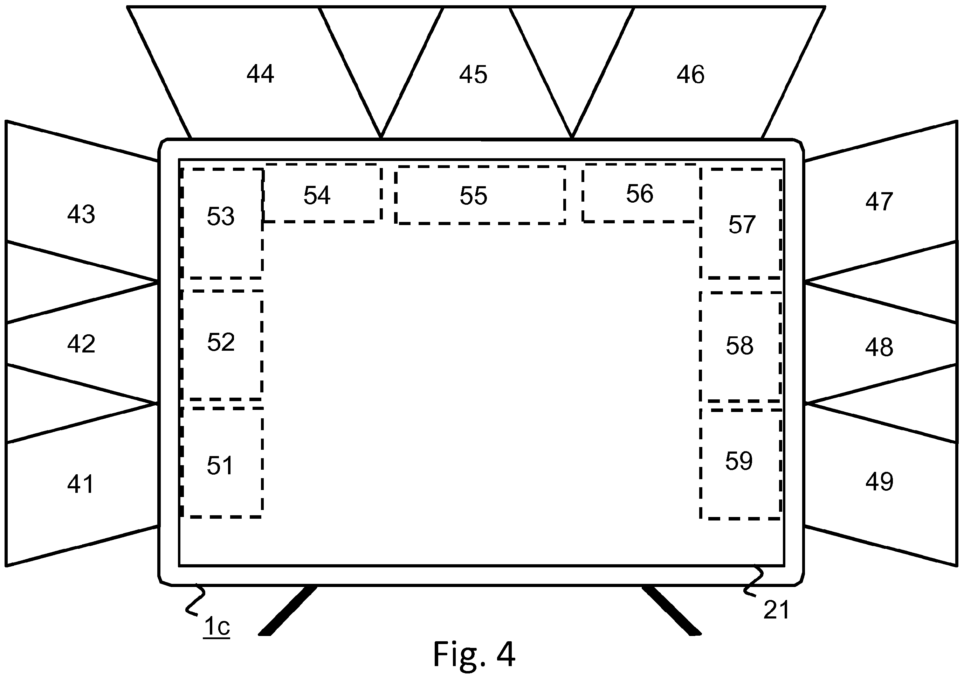

Fig. 4 shows an electronic device 1 c that is similar to the electronic device 1 b of Figs. 2 and 3 , but now with light strips 13 placed at the left, right and top sides of the electronic device 1c and each side comprising three segments of light emitting elements. For example, three light strips 13 or one light strip 13 comprising three segments may be placed at each side. These lights strips 13 generate light beams 41, 42, 43, 44, 45, 46, 47, 48 and 49. Each segment corresponds to a measurement zone in image 21. In a regular viewing mode, light beam 41 corresponds to measurement zone 51, light beam 42 corresponds to measurement zone 52, light beam 43 corresponds to measurement zone 53, light beam 44 corresponds to measurement zone 54, light beam 45 corresponds to measurement zone 55, light beam 46 corresponds to measurement zone 56, light beam 47 corresponds to measurement zone 57, light beam 48 corresponds to measurement zone 58 and light beam 49 corresponds to measurement zone 59.

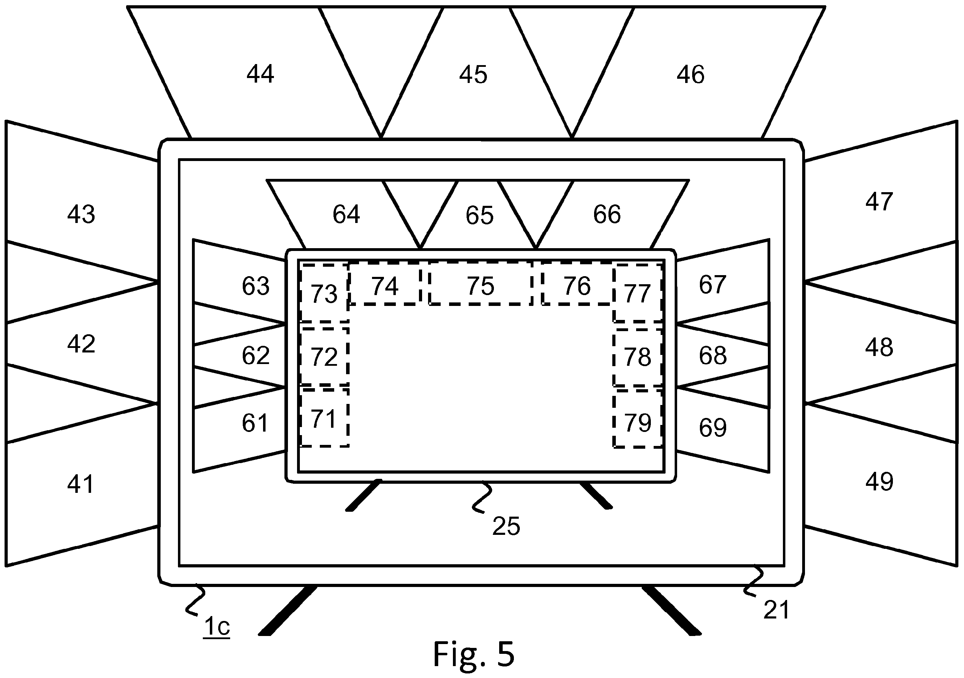

When the virtual display device 25 is displayed on display 11, as shown in Fig. 5 , the measurement zones are moved and scaled so that they fall within the content item shown by the virtual display device 25 and do not overlap (as the measurement zones 51 to 59 do not overlap either). In this mode, the real light beam 41 and a virtual light beam 61 correspond to measurement zone 71, the real light beam 42 and a virtual light beam 62 correspond to measurement zone 72, the real light beam 43 and a virtual light beam 63 correspond to measurement zone 73, the real light beam 44 and a virtual light beam 64 correspond to measurement zone 74, the real light beam 45 and a virtual light beam 65 correspond to measurement zone 75, the real light beam 46 and a virtual light beam 66 correspond to measurement zone 76, the real light beam 47 and a virtual light beam 67 correspond to measurement zone 77, the real light beam 48 and a virtual light beam 68 correspond to measurement zone 78 and the real light beam 49 and a virtual light beam 69 correspond to measurement zone 79. The analysis of the measurement zones 71 to 79 may comprise determining an average or median color and intensity of each measurement zone, for example. In this embodiment, the dimensions of the measurement zones 71-79 have a certain relation to the dimensions of the content item when the virtual display device 25 is displayed and the dimensions of the measurement zones 51-59 have the same relation to dimensions of the image 21 when regular content is displayed. Each measurement zone occupies the same amount of space of the actual content, independent of whether the actual content is the entire image or a content item displayed by the virtual display device 25. For example, when the virtual display device shows content items with a size of 960x540 pixels, the display has a resolution of 1920x1080 pixels and one of the rectangular measurement zones is 300x200 pixels in a regular viewing mode, this measurement zone is scaled to 150x100 pixels when the virtual displayed device is displayed.

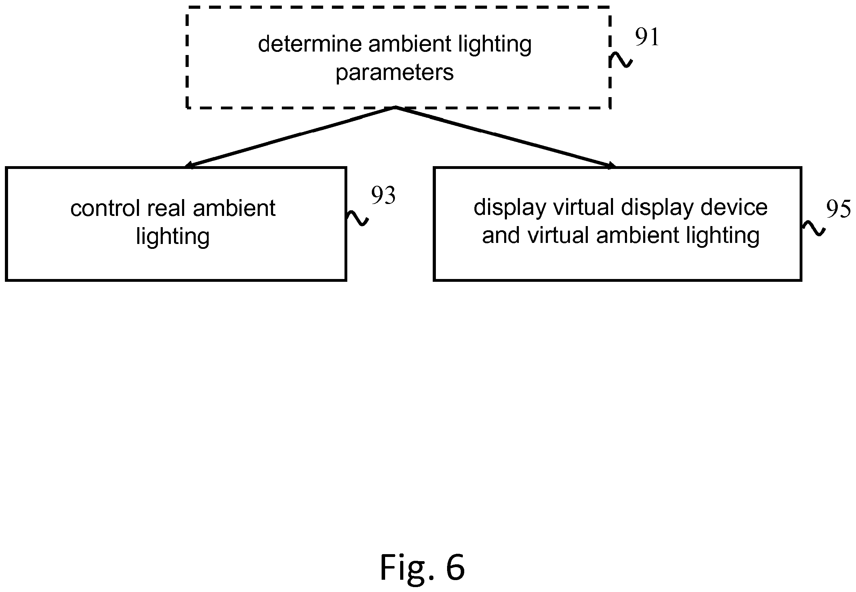

The method of the invention comprises a step 93 and a step 95, see Fig. 6 . Step 93 comprises controlling ambient lighting surrounding a display using parameters determined based on contents of an image displayed on the display. Step 95 comprises causing a virtual display device and virtual ambient lighting surrounding the virtual display device to be displayed on the display. The virtual ambient lighting is generated using further parameters similar or identical to the parameters. The parameters are determined based on a content item displayed by the virtual display device and not based on the virtual ambient lighting surrounding the virtual display device. Step 93 may be performed before or after step 95 or steps 93 and 95 may be performed in parallel.

In an embodiment, the method further comprises a step 91 of determining the parameters by analyzing a plurality of measurement zones in the image. Step 91 is performed before steps 93 and 95. In step 91, preferably the same amount of the measurement zones is analyzed when displaying the virtual display device as when regular content is displayed. The measurement zones are preferably near at least two sides of the image when regular content is displayed. Preferably, dimensions of the measurement zones have a certain relation to dimensions of the content item when the virtual display device is displayed and dimensions of the measurement zones have the same relation to dimensions of the image when regular content is displayed. Preferably, the measurement zones have a similar or identical overlap when said virtual display device is displayed as when regular content is displayed. An identical overlap exists, for example, when there are no overlapping measurement zones in either mode. A similar overlap exists, for example, when the measurement zones have the same or a similar relative overlap, e.g. 10% at the top of a measurement zone and 10% at the bottom of that measurement zone in both modes.

The method of the invention may be performed by a processor of a device for demonstrating ambient lighting surrounding a display and/or by software (for) running on a processor of a programmable device.

## Claims

1. An electronic device (la-c) for generating and demonstrating ambient lighting (31-32, 41-49) surrounding a display (11), the electronic device (la-c) comprising:
- a display interface (7) for sending an image (21) to said display (11);
- an ambient lighting controller (5) operative to control ambient lighting (31-32, 41-49) surrounding said display (11) using parameters determined based on contents of said image (21); and
- a processor (3) operative to use said display interface (7) to cause said display (11) to display, in a demonstration mode, a virtual display device (23, 25) showing resolution-scaled contents and a virtual ambient lighting (37-38, 61-69) surrounding said virtual display device (23, 25) while the ambient lighting (37-38, 61-69) is generated, **characterized in that** in said demonstration mode, said ambient lighting (31-32, 41-49) and said virtual ambient lighting (37-38, 61-69) are both generated using parameters, that are determined by analyzing the contents displayed by said virtual display device (23, 25) and not based on said virtual ambient lighting (37-38, 61-69).

2. An electronic device (la-c) as claimed in claim 1, wherein said parameters are determined by analyzing a plurality of measurement zones (34a-b, 35a-b, 51-59, 71-79) in said image.

3. An electronic device (la-c) as claimed in claim 2, wherein the same amount of said measurement zones (34a-b, 35a-b, 51-59, 71-79) is analyzed when said virtual display device is displayed (23, 25) as when regular content is displayed.

4. An electronic device (la-c) as claimed in claim 2 or 3, wherein said measurement zones (34a, 35a, 51-59) are positioned near at least two sides of said image (21) when regular content is displayed.

5. An electronic device (1 a-c) as claimed in any of claims 2 to 4, wherein dimensions of said measurement zones (34b, 35b, 71-79) have a certain relation to dimensions of said content item when said virtual display device (23, 25) is displayed and dimensions of said measurement zones (34a, 35a, 51-59) have said certain relation to dimensions of said image (21) when regular content is displayed.

6. An electronic device (la-c) as claimed in any of claims 2 to 5, wherein said measurement zones (34a-b, 35a-b, 51-59, 71-79) have a similar or identical overlap when said virtual display device (23, 25) is displayed as when regular content is displayed.

7. An electronic device (la-c) as claimed in any of the preceding claims, wherein said virtual display device (23, 25) has the same appearance as a device (1 b, 1 c) comprising said display (11).

8. An electronic device (la-c) as claimed in any of the preceding claims, wherein said processor (3) is further operative to use said display interface (7) to cause a background to be displayed around said virtual display device (23, 25) on said display (11).

9. A method of generating and demonstrating ambient lighting surrounding a display, comprising the steps of:
- controlling (93) ambient lighting (31-32, 41-49) surrounding a display using parameters determined based on contents of an image displayed on said display; and
- causing (95) said display (11) to display, in a demonstration mode, a virtual display device (23, 25) showing resolution-scaled contents and a virtual ambient lighting (37-38, 61-69) surrounding said virtual display device (23, 25) while the ambient lighting (31-32, 41-49) is generated, **characterized in that** in said demonstration mode, said ambient lighting (31-32, 41-49) and said virtual ambient lighting (37-38, 61-69) are both generated using parameters, that are determined by analyzing the contents displayed by said virtual display device (23, 25) and not based on said virtual ambient lighting (37-38, 61-69) surrounding said virtual display device (23, 25).

10. A method as claimed in claim 9, further comprising the step of determining (91) said parameters by analyzing a plurality of measurement zones in said image.

11. A method as claimed in claim 10, wherein the same amount of said measurement zones is analyzed when said virtual display device is displayed as when regular content is displayed.

12. A method as claimed in claim 10 or 11, wherein said measurement zones are positioned near at least two sides of said image when regular content is displayed.

13. A method as claimed in any of claims 10 to 12, wherein dimensions of said measurement zones have a certain relation to dimensions of said content item when said virtual display device is displayed and dimensions of said measurement zones have said certain relation to dimensions of said image when regular content is displayed.

14. A method as claimed in any of claims 10 to 13, wherein said measurement zones have a similar or identical overlap when said virtual display device is displayed as when regular content is displayed.

15. A computer program product enabling a programmable device to perform the method of any of claims 9 to 14.

## Patentansprüche

1. Elektronische Vorrichtung (la-c) zum Erzeugen und Demonstrieren einer einen Bildschirm (11) umgebenden Umgebungsbeleuchtung (31-32, 41-49), welche elektronische Vorrichtung (la-c) enthält:
- eine Bildschirmschnittstelle (7) zum Senden eines Bildes (21) an den Bildschirm (11);
- eine Umgebungsbeleuchtungssteuerung (5), die so arbeitet, dass sie die den Bildschirm (11) umgebende Umgebungsbeleuchtung (31-32, 41-49) unter Verwendung von Parametern steuert, die auf der Grundlage der Inhalte des Bildes (21) ermittelt werden; und
- einen Prozessor (3), der so arbeitet, dass er die Bildschirmschnittstelle (7) nutzt, um den Bildschirm (11) zu veranlassen, in einem Demonstrationsmodus eine virtuelle Bildschirmvorrichtung (23, 25) anzuzeigen, die auflösungs-skalierte Inhalte und eine die virtuelle Bildschirmvorrichtung (23, 25) umgebende virtuelle Umgebungsbeleuchtung (37-38, 61-69) zeigt, während die Umgebungsbeleuchtung (37-38, 61-69) erzeugt wird, **dadurch gekennzeichnet, dass** in dem Demonstrationsmodus die Umgebungsbeleuchtung (31-32, 41-49) und die virtuelle Umgebungsbeleuchtung (37-38, 61-69) beide unter Verwendung von Parametern erzeugt werden, die durch Analysieren der von der virtuellen Bildschirmvorrichtung (23, 25) angezeigten Inhalte und nicht auf der Grundlage der virtuellen Umgebungsbeleuchtung (37-38, 61-69) ermittelt werden.

2. Elektronische Vorrichtung (la-c) nach Anspruch 1, wobei die Parameter durch Analysieren einer Vielzahl von Messzonen (34a-b, 35a-b, 51-59, 71-79) in dem Bild ermittelt werden.

3. Elektronische Vorrichtung (la-c) nach Anspruch 2, wobei dieselbe Menge von Messzonen (34a-b, 35a-b, 51-59, 71-79) analysiert wird, wenn die virtuelle Bildschirmvorrichtung (23, 25) angezeigt wird, als wenn regulärer Inhalt angezeigt wird.

4. Elektronische Vorrichtung (la-c) nach Anspruch 2 oder 3, wobei die Messzonen (34a, 35a, 51-59) nahe an mindesten zwei Seiten des Bildes (21) positioniert sind, wenn regulärer Inhalt angezeigt wird.

5. Elektronische Vorrichtung (la-c) nach einem der Ansprüche 2 bis 4, wobei Abmessungen der Messzonen (34b, 35b, 71-79) eine bestimmte Relation zu Abmessungen des Inhaltselements haben, wenn die virtuelle Bildschirmvorrichtung (23, 25) angezeigt wird, und Abmessungen der Messzonen (34a, 35a, 51-59) die bestimmte Relation zu Abmessungen des Bildes (21) haben, wenn regulärer Inhalt angezeigt wird.

6. Elektronische Vorrichtung (la-c) nach einem der Ansprüche 2 bis 5, wobei die Messzonen (34a-b, 35a-b, 51-59, 71-79) eine ähnliche oder identische Überlappung haben, wenn die virtuelle Bildschirmvorrichtung (23, 25) angezeigt wird, als wenn regulärer Inhalt angezeigt wird.

7. Elektronische Vorrichtung (la-c) nach einem der vorhergehenden Ansprüche, wobei die virtuelle Bildschirmvorrichtung (23, 25) dasselbe Erscheinungsbild wie eine den Bildschirm (11) enthaltende Vorrichtung (1b, 1c) hat.

8. Elektronische Vorrichtung (la-c) nach einem der vorhergehenden Ansprüche, wobei der Prozessor (3) ferner so arbeitet, dass er die Bildschirmschnittstelle (7) nutzt, um zu veranlassen, dass ein Hintergrund um die virtuelle Bildschirmvorrichtung (23, 25) auf dem Bildschirm (11) angezeigt wird.

9. Verfahren zum Erzeugen und Demonstrieren einer einen Bildschirm umgebenden Umgebungsbeleuchtung, enthaltend die Schritte:
- Steuern (93) einer einen Bildschirm umgebenden Umgebungsbeleuchtung (31-32, 41-49) unter Verwendung von Parametern, die auf der Grundlage von Inhalten eines auf dem Bildschirm angezeigten Bildes ermittelt werden; und
- Veranlassen (95) des Bildschirms (11), in einem Demonstrationsmodus eine virtuelle Bildschirmvorrichtung (23, 25) anzuzeigen, die auflösungs-skalierte Inhalte und eine die virtuelle Bildschirmvorrichtung (23, 25) umgebende virtuelle Umgebungsbeleuchtung (37-38, 61-69) zeigt, während die Umgebungsbeleuchtung (31-32, 41-49) erzeugt wird, **dadurch gekennzeichnet, dass** in dem Demonstrationsmodus die Umgebungsbeleuchtung (31-32, 41-49) und die virtuelle Umgebungsbeleuchtung (37-38, 61-69) beide unter Verwendung von Parametern erzeugt werden, die durch Analysieren der von der virtuellen Bildschirmvorrichtung (23, 25) angezeigten Inhalte und nicht auf der Grundlage der die virtuelle Bildschirmvorrichtung (23, 25) umgebenden virtuellen Umgebungsbeleuchtung (37-38, 61-69) ermittelt werden.

10. Verfahren nach Anspruch 9, ferner enthaltend den Schritt des Ermittelns (91) der Parameter durch Analysieren einer Vielzahl von Messzonen in dem Bild.

11. Verfahren nach Anspruch 10, wobei dieselbe Menge von Messzonen analysiert wird, wenn die virtuelle Bildschirmvorrichtung angezeigt wird, als wenn regulärer Inhalt angezeigt wird.

12. Verfahren nach Anspruch 10 oder 11, wobei die Messzonen nahe an mindesten zwei Seiten des Bildes positioniert sind, wenn regulärer Inhalt angezeigt wird.

13. Verfahren nach einem der Ansprüche 10 bis 12, wobei Abmessungen der Messzonen eine bestimmte Relation zu Abmessungen des Inhaltselements haben, wenn die virtuelle Bildschirmvorrichtung angezeigt wird, und Abmessungen der Messzonen die bestimmte Relation zu Abmessungen des Bildes haben, wenn regulärer Inhalt angezeigt wird.

14. Verfahren nach einem der Ansprüche 10 bis 13, wobei die Messzonen eine ähnliche oder identische Überlappung haben, wenn die virtuelle Bildschirmvorrichtung angezeigt wird, als wenn regulärer Inhalt angezeigt wird.

15. Computerprogrammprodukt, das eine programmierbare Vorrichtung in die Lage versetzt, das Verfahren nach einem der Ansprüche 9 bis 14 auszuführen.

## Revendications

1. Un dispositif électronique (la-c) pour générer et démontrer l'éclairage ambiant (31-32, 41-49) entourant un affichage (11), le dispositif électronique (la-c) comprenant
- une interface d'affichage (7) permettant d'envoyer une image (21) audit affichage (11) ;
- un contrôleur d'éclairage ambiant (5) fonctionnant pour contrôler l'éclairage ambiant (31-32, 41-49) entourant ledit affichage (11) en utilisant des paramètres déterminés sur la base du contenu de ladite image (21) ; et
- un processeur (3) fonctionnant pour utiliser ladite interface d'affichage (7) pour faire en sorte que ledit affichage (11) affiche, dans un mode de démonstration, un dispositif d'affichage virtuel (23, 25) montrant un contenu à l'échelle de résolution et un éclairage ambiant virtuel (37-38, 61-69) entourant ledit dispositif d'affichage virtuel (23, 25) tandis que l'éclairage ambiant (37-38, 61-69) est généré, **caractérisé en ce que** dans ledit mode de démonstration, ledit éclairage ambiant (31-32, 41-49) et ledit éclairage ambiant virtuel (37-38, 61-69) sont tous deux générés en utilisant des paramètres qui sont déterminés par l'analyse du contenu affiché par ledit dispositif d'affichage virtuel (23, 25) et non basés sur ledit éclairage ambiant virtuel (37-38, 61-69).

2. Dispositif électronique (la-c) selon la revendication 1, dans lequel lesdits paramètres sont déterminés en analysant une pluralité de zones de mesure (34a-b, 35a-b, 51-59, 71-79) dans ladite image.

3. Dispositif électronique (la-c) selon la revendication 2, dans lequel la même quantité desdites zones de mesure (34a-b, 35a-b, 51-59, 7179) est analysée lorsque ledit dispositif d'affichage virtuel est affiché (23, 25) que lorsque le contenu régulier est affiché.

4. Dispositif électronique (la-c) selon la revendication 2 ou 3, dans lequel lesdites zones de mesure (34a, 35a, 51-59) sont positionnées près d'au moins deux côtés de ladite image (21) lorsque le contenu régulier est affiché.

5. Dispositif électronique (la-c) selon l'une quelconque des revendications 2 à 4, dans lequel les dimensions desdites zones de mesure (34b, 35b, 71-79) ont une certaine relation avec les dimensions dudit élément de contenu lorsque ledit dispositif d'affichage virtuel (23, 25) est affiché et les dimensions desdites zones de mesure (34a, 35a, 51-59) ont ladite certaine relation avec les dimensions de ladite image (21) lorsque le contenu régulier est affiché.

6. Dispositif électronique (la-c) selon l'une quelconque des revendications 2 à 5, dans lequel lesdites zones de mesure (34a-b, 35a-b, 51-59, 71-79) ont un chevauchement similaire ou identique lorsque ledit dispositif d'affichage virtuel (23, 25) est affiché comme lorsqu'un contenu régulier est affiché.

7. Dispositif électronique (la-c) selon l'une quelconque des revendications précédentes, dans lequel ledit dispositif d'affichage virtuel (23, 25) a la même apparence qu'un dispositif (1b, 1c) comprenant ledit affichage (11).

8. Dispositif électronique (la-c) selon l'une quelconque des revendications précédentes, dans lequel ledit processeur (3) est en outre opérationnel pour utiliser ladite interface d'affichage (7) afin de provoquer l'affichage d'un arrière-plan autour dudit dispositif d'affichage virtuel (23, 25) sur ledit affichage (11).

9. Procédé de génération et de démonstration de l'éclairage ambiant entourant un affichage, comprenant les étapes destinées à :
- contrôler (93) l'éclairage ambiant (31-32, 41-49) entourant un affichage en utilisant des paramètres déterminés en fonction du contenu d'une image affichée sur ledit affichage ; et
- faire en sorte (95) que ledit écran (11) affiche, en mode démonstration, un dispositif d'affichage virtuel (23, 25) montrant un contenu à l'échelle de la résolution et un éclairage ambiant virtuel (37-38, 61-69)
entourant ledit dispositif d'affichage virtuel (23, 25) tandis que l'éclairage ambiant (31-32, 41-49) est généré, **caractérisé en ce que** dans ledit mode de démonstration, ledit éclairage ambiant (31-32, 41-49) et ledit éclairage ambiant virtuel (37-38, 61-69) sont tous deux générés en utilisant des paramètres, qui sont déterminés en analysant le contenu affiché par ledit dispositif d'affichage virtuel (23, 25) et non pas en fonction dudit éclairage ambiant virtuel (37-38, 61-69) entourant ledit dispositif d'affichage virtuel (23, 25).

10. Procédé selon la revendication 9, comprenant en outre l'étape consistant à déterminer (91) lesdits paramètres en analysant une pluralité de zones de mesure dans ladite image.

11. Procédé selon la revendication 10, dans lequel la même quantité desdites zones de mesure est analysée lorsque ledit dispositif d'affichage virtuel est affiché que lorsque le contenu régulier est affiché.

12. Procédé selon la revendication 10 ou 11, dans lequel lesdites zones de mesure sont positionnées près d'au moins deux côtés de ladite image lorsque le contenu régulier est affiché.

13. Procédé selon l'une quelconque des revendications 10 à 12, dans lequel les dimensions desdites zones de mesure ont une certaine relation avec les dimensions dudit élément de contenu lorsque ledit dispositif d'affichage virtuel est affiché et les dimensions desdites zones de mesure ont ladite certaine relation avec les dimensions de ladite image lorsque le contenu régulier est affiché.

14. Procédé selon l'une quelconque des revendications 10 à 13, dans lequel lesdites zones de mesure ont un chevauchement similaire ou identique lorsque ledit dispositif d'affichage virtuel est affiché comme lorsqu'un contenu régulier est affiché.

15. Programme informatique permettant à un dispositif programmable d'exécuter le procédé selon l'une quelconque des revendications 9 à 14.
